**Europäisches Patentamt**

**European Patent Office**

**Office européen des brevets**

(19)

(11) Veröffentlichungsnummer : **0 245 198 B1**

## (12) EUROPÄISCHE PATENTSCHRIFT

(45) Veröffentlichungstag der Patentschrift :
**27.02.91 Patentblatt 91/09**

(51) Int. Cl.⁵ : **G01B 11/10**, G02B 26/10, G02B 5/32

(21) Anmeldenummer : **87810171.6**

(22) Anmeldetag : **24.03.87**

(54) **Vorrichtung und Verfahren zur Erzeugung eines telezentrischen Lichtstrahls und Verfahren zur Herstellung eines holographischen Elements.**

(30) Priorität : **03.04.86 CH 1299/86**

(43) Veröffentlichungstag der Anmeldung :
**11.11.87 Patentblatt 87/46**

(45) Bekanntmachung des Hinweises auf die Patenterteilung :
**27.02.91 Patentblatt 91/09**

(84) Benannte Vertragsstaaten :
**AT BE DE ES FR GB IT NL SE**

(56) Entgegenhaltungen :
**EP-A- 0 140 594**
**GB-A- 2 072 840**
**US-A- 3 951 509**
**PATENT ABSTRACTS OF JAPAN, Band 8, Nr. 6 (P-247)[1443], 12. Januar 1984; & JP-A-58 168 907 (ANRITSU DENKI K.K.) 05.10.1983**

(56) Entgegenhaltungen :
**APPLIED OPTICS, Band 25, Nr. 5, 1. März 1986, Seiten 794-797, New York, US; Y. ONO et al.: "Holographic zone plates for F.8 and collimating lenses"**
**PATENT ABSTRACTS OF JAPAN, Band 7, Nr. 212 (P-224)[1357], 20. September 1983; & JP-A-58 106 519 (RICOH K.K.) 24.06.1983**

(73) Patentinhaber : **ZUMBACH ELECTRONIC AG**
**Hauptstrasse 93**
**CH-2552 Orpund (CH)**

(72) Erfinder : **Käser, Beda**
**c/o Zumbach Electronic AG Hauptstrasse 93**
**CH-2552 Orpund (CH)**

(74) Vertreter : **Jaeger, Klaus, Dr. et al**
**Patentanwälte JAEGER, LORENZ & KÖSTER**
**Pippinplatz 4a**
**D-8035 München-Gauting (DE)**

# Beschreibung

Die Erfindung betrifft ein Verfahren zur Erzeugung eines telezentrischen Lichtstrahls zur Messung der Ausdehnung und/oder der Lage eines Objektes im Bereich des Ablenkungshubes des Lichtstrahls, also im Bereich des sogenannten "optischen Vorhangs" der im Oberbegriff des patentanspruchs 1 genannten Art.

Die Erfindung betrifft weiterhin eine Vorrichtung zur Durchführung dieses Verfahrens.

Schließlich betrifft die Erfindung ein Verfahren zur photographischen Herstellung eines holographischen optischen Elementes, das zur Durchführung des Verfahrens bzw. zur Herstellung der Vorrichtung zur Erzeugung des telezentrischen Lichtstrahls erforderlich ist.

Aus der Druckschrift GB-A-2 072 840 ist eine Vorrichtung zum berührungslosen Vermessen der Dimensionen eines Gegenstandes bekannt, der im Hubbereich eines von einem telezentrischen Objektiv erzeugten Taststrahls angeordnet ist. Zur Erzeugung des telezentrischen Taststrahls dient eine vergleichsweise große und insbesondere dicke Kollimatorlinse, in deren Brennpunkt auf der Eingangsseite des Objektivs ein Drehspiegel angeordnet ist. Auf den Drehspiegel ist ein Laserstrahl gerichtet, der zur Kollimatorlinse reflektiert wird und aus dieser als telezentrischer Taststrahl austritt. Der optischen Qualität und der Höhe des optischen Vorhangs sind bei dieser Vorrichtung durch die erforderliche Dicke und den erforderlichen Durchmesser der Kollimatorlinse oder eines äquivalenten Linsensystems vergleichsweise enge Grenzen gesetzt.

Ausgehend von diesem Stand der Technik liegt der Erfindung die Aufgabe zugrunde, Verfahren und Vorrichtung zur berührungslosen optischen Bestimmung der Dimension und Lage eines Gegenstands zu verbessern, und zwar sowohl im Hinblick auf eine qualitative Verbesserung der optischen Leistung und der mechanischen Konstruktionsmerkmale der Vorrichtung als auch im Hinblick auf eine Verbilligung der bislang bekannten und durch die großen und schweren Linsenobjektive teuren Vorrichtungen.

Diese Aufgabe löst die Erfindung durch ein Verfahren bzw. durch eine Vorrichtung zur Durchführung dieses Verfahrens, die durch die im Anspruch 1 bzw. im Anspruch 5 genannten Merkmale gekennzeichnet sind.

Kernpunkt der Erfindung ist also ein holographisches optisches Element zum Beugen eines Eintrittsstrahls, das in an sich bekannter Weise photographisch hergestellt worden ist, und zwar gemäß der Erfindung durch Überlagerung einer ebenen, in Richtung des telezentrischen Strahls verlaufenden Wellenfront und einer von einer punktförmigen Lichtquelle im Brennpunkt der Optik ausgehenden Kugelwelle.

Aus den Druckschriften US-A-3 951 509, EP-A-140 594 und "Applied Optics", Band 25, Nr. 5, 1. März 1986, Seiten 794-797, New York, US, ist zwar bekannt, Hologramme auch komplexer Konfiguration in Objektiven und optischen Vorrichtungen unterschiedlicher Art zu verwenden, jedoch weist keine dieser bekannten technischen Lehren den durch die Erfindung aufgezeigten Weg der Verwendung des spezifischen ojektivorientierten Hologramms zur Verbesserung von Verfahren und Vorrichtungen zum berührungslosen Messen der Dimension und/oder Lage von Gegenständen.

Die Erfindung wird nun anhand von Ausführungsbeispielen näher erläutert :

Fig. 1 zeigt eine Vorrichtung zur Ermittlung der Dimension und Lage eines Objekts in Stirnansicht,

Fig. 2 zeigt eine Draufsicht auf diese Vorrichtung,

Fig. 3 bis 5 zeigen Ausführungsvarianten der Vorrichtung nach Fig. 1, die

Fig. 6 und 7 dienen der Erläuterung der Herstellung eines HOE und dessen Wirkung bei der Erzeugung eines telezentrischen Strahls,

Fig. 8 zeigt schematisch ein weiteres Ausführungsbeispiel einer Messvorrichtung, die

Fig. 9 und 10 zeigen die Anwendungung zweier zusammenwirkender HOE zur Linearisierung der Strahlablenkung, und

Fig. 11 zeigt ein weiteres Ausführungsbeispiel mit linearer Ablenkung des telezentrischen Strahls.

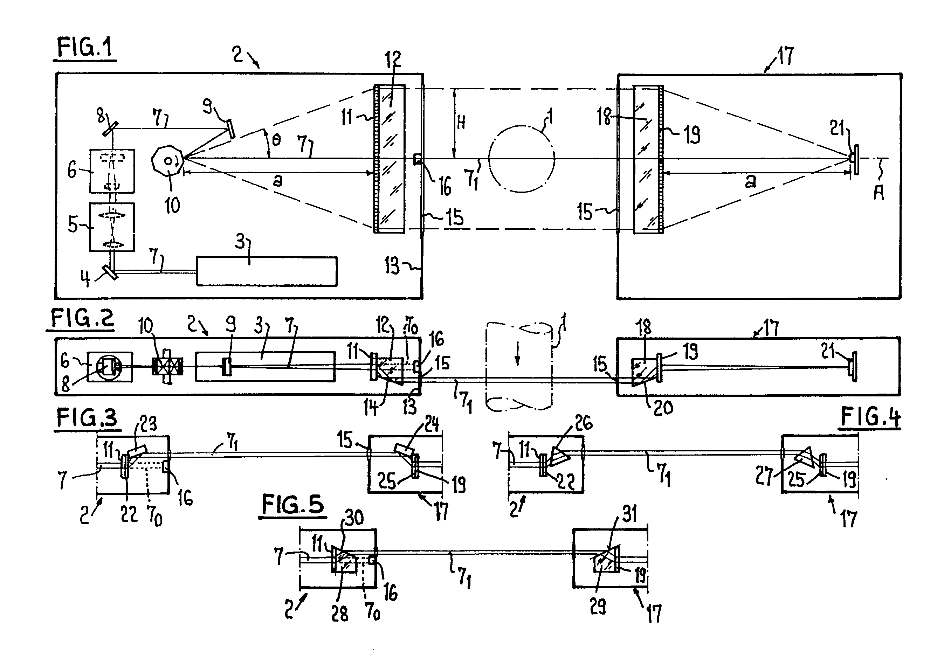

Die Figuren 1 und 2 zeigen eine Vorrichtung zur Erfassung einer Dimension bzw. der Lage eines in diesen Figuren strichpunktiert angedeutenden Objekts 1, beispielsweise eines einen Extruder verlassenden Kabels oder Rohres. Die Erfassung mindestens einer Dimension solcher produkte ist von besonderer Bedeutung, um Produktionsfehler laufend zu erfassen und zu korrigieren. Die Messvorrichtung weist einen Sendeteil 2 auf, welcher der Erzeugung eines telezentrischen Lichtstrahls im Messbereich dient. Es ist eine Laserquelle 3 vorgesehen, welche einen kontinuierlichen, monochromatischen Lichtstrahl über einen Spiegel 4 einer sphärischen Aufweitungsoptik 5 zuführt, aus welcher der aufgeweitete Strahl in eine zylindrische Aufweitungsoptik 6 eintritt. Es wird damit ein flacher Lichtstrahl erzeugt, dessen Ebene parallel zur Längsachse des zu messenden Objektes liegt. Dies ist in den Figuren 1 und 2 angedeutet, indem der Lichtstrahl 7 im Bereiche des Objekts 1 in der Projektion nach Fig. 1 sehr geringe Dicke, in der Projektion nach Fig. 2 jedoch eine gewisse Breite aufweist. Dieser Lichtstrahl 7 wird über weitere Umlenkspiegel 8 und 9 auf einen achteckigen drehbaren Spiegel 10 geworfen. Bei der Drehung dieses Spiegels im Uhrzeigersinn wird der eintretende Lichtstrahl 7 periodisch über einen in Fig. 1 durch gestrichelte Linien angedeuteten Winkelbereich von oben nach unten abgelenkt, Er trifft dann auf ein holographisches optisches Element 11, im folgenden kurz HOE genannt, auf. Dieses HOE, dessen optisch wirksame Schicht sehr dünn ist und sich auf einem dünnen optisch durchsichtigen Träger befindet, ist mit einem Prismenkörper 12 verbunden und damit mechanisch stabilisiert. Durch das HOE 11 tritt eine gewisse Teilstrahlung O-ter Ordnung $7_0$ ungebeugt durch und trifft von innen auf die Vorderwand 13 des Gehäuses des Senders 2. Der Hauptanteil des eintretenden Strahls 7 wird dagegen gebeugt und tritt als Strahl 1. Ordnung $7_1$ unter einem bestimmten Winkel aus dem HOE aus. Er wird an einer total reflektierenden oder verspiegelten Fläche 14 des Prismenkörpers 12 reflektiert und durch ein Fenster 15 in den Messbereich geworfen. An der Auftreffstelle des austretenden Strahls O-ter Ordnung $7_0$ kann ein oder können mehrere opto-elektrische Wandler 16 angeordnet sein. Der Strahl $7_1$ tritt auf der gegenüberliegenden Seite des Messbereiches durch ein Fenster 15 in das Gehäuse eines Empfängers 17 ein, in welchem sich ein dem Prismenkörper 12 entsprechend ausgebildeter Prismenkörper 18 mit einem dem HOE 11 entsprechenden HOE 19 befindet. Der eintretende Lichtstrahl wird durch die reflektierende Fläche 20 des Prismenkörpers 18 auf das HOE 19 geworfen, welches den Strahl stets auf einen opto-elektrischen Wandler 21, beispielsweise eine Fotozelle, wirft.

Bei der periodischen Ablenkung des telezentrischen Strahls um den durch die gestrichelten Linien in Fig. 1 begrenzten Ablenkungshub, gelangt der Strahl zum Wandler 21, solange er nicht durch das Objekt 1 abgeblendet ist. Aus der Dauer der Abblendung und aus den Zeitpunkten des Beginns und Endes der Abblendung, kann auf die Dimension und auf die Lage des Objekts 1 geschlossen werden. Für einen Ablenkungswinkel θ des am rotierenden Spiegel 10 reflektierten Strahls 7 gegenüber der Längssymmetrieachse A der Vorrichtung beträgt der Abstand des telezentrischen Strahls von dieser Längssymmetrieachse $H = a . \mathrm{tg}\, \theta$, wobei a der Abstand zwischen der reflektierenden Stelle am Spiegel 10 und dem HOE 11 bedeutet. Davon ausgehend, dass das HOE eine vernachlässigbar kleine Dicke aufweist, eben ist und senkrecht zur Längssymmetrieachse A der Vorrichtung steht, erfolgt die Ablenkung des telezentrischen Strahls $7_1$ genau nach einer Tangensfunktion, wenn man davon ausgeht, dass die Winkelgechwindigkeit des am Spiegel 10 reflektierten Strahls 7 konstant sei. Bei der Auswertung des am Wandler 21 auftretendem Messsignals kann somit diese Tangensfunktion berücksichtigt werden, so dass eine genaue Ermittlung der Dimension und Lage des Objektes 1 ohne besondere Eichung der Vorrichtung erfolgen kann. Wird hierbei mittels des opto-elektrischen Wandlers 16 noch der genaue Zeitpunkt des Durchgangs des telezentrischen Strahls durch die Längssymmetrieachse der Vorrichtung erfasst, können alle Messwerte auf diesen O-Durchgang bezogen werden, bei welchem $\mathrm{tg}\, \theta = O$ ist. Es ist damit gezeigt, dass die Umlenkung des Lichtstrahls durch ein HOE sich nicht nur in einer besonderen Einfachheit der Optik, sondern auch zusätzlich in einer Einfachheit und Genauigkeit der Messung auswirkt.

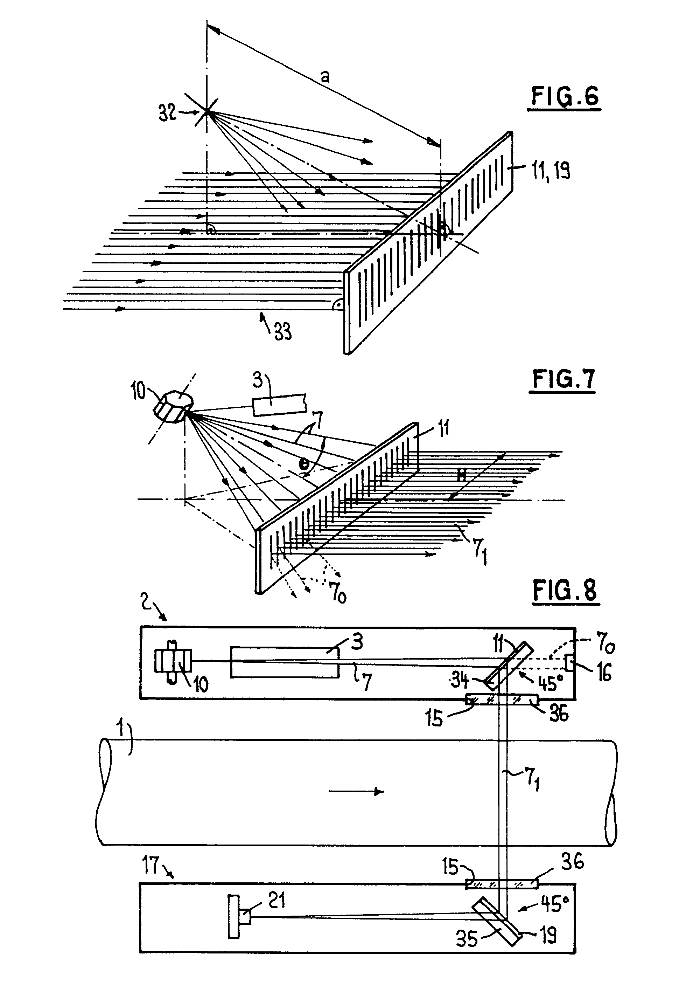

Die Figuren 3 bis 5 zeigen einige Ausführungsvarianten der Optik des Senders 2 und des Empfängers 17, wobei entsprechende Teile gleich bezeichnet sind wie in den Figuren 1 und 2. Das HOE 11 ist gemäss Fig. 3 auf einen flachen, durchsichtigen Träger 22 aufgezogen. Der gebeugte Strahl $7_1$ wird in diesem Falle an einem Reflektor 23 umgelenkt. Entsprechend ist im Empfänger 17 ein Reflektor 24 angeordnet und das HOE 19 des Empfängers 17 ist auf einen flachen Träger 25 aufgezogen,

Gemäss Fig. 4 sind die HOE 11 und 19 entsprechend auf flache Träger 22 bzw. 25 aufgezogen, und die Strahlumlenkung erfolgt durch Brechungsprismen 26 bzw. 27.

Gemäss Fig. 5 sind die HOE 11 und 19 auf Prismenkörper 28 bzw. 29 aufgezogen, und der telezentrische Strahl $7_1$ wird durch Brechung an den Prismenflächen 30 bzw. 31 umgelenkt.

Fig. 6 zeigt eine mögliche Herstellungsart eines HOE 11 bzw. 19. Ein ebener flacher Streifen mit einer lichtempfindlichen Schicht wird mit kohärentem Licht aus einem He-Ne-Gaslaser von einer Punktlichtquelle, erzeugt durch einen Raumfilter 32, und zugleich mit einem kollimierten Strahl oder einer ebenen Wellenfront 33 desselben Lasers belichtet. Diese Belichtung einerseits mit der Kugelwelle aus der Punktlichtquelle bzw. dem Raumfilter 32 und mit der ebenen Wellenfront 33, ergibt nach entsprechender Entwicklung des lichtempfindlichen Materials ein HOE, welches die anhand der Fig. 1 und 2 beschriebene Umlenkung eines Lichtstrahls von entsprechendem Licht ergibt. Voraussetzung ist dabei, dass die Punktlichtquelle 32 sich bezüglich des lichtempfindlichen Materials in entsprechender Lage am Ort bzw. über dem Ort des nachmaligen Ablenkungpunktes am rotierenden Spiegel 10 befindet. Der Abstand a gemäss Fig. 6 soll also dem Abstand a nach Fig. 1 entsprechen. Ein derart erzeugtes HOE hat zugleich die erwähnte Wirkung, sowohl den um den Winkel θ abgelenkten Strahl 7 telezentrisch umzulenken, als auch diesen telezentrischen Strahl auf den Wandler 21 umzulenken. In Fig, 1 ist dabei angenommen, dass gleichartige HOE 11 und 19 verwendet werden, d.h. dass die Distanz bzw. Brennweite a in beiden Fällen die gleiche sei. Es können natürlich auch anders bemessene HOE verwendet werden, Es ist insbesondere möglich, im Empfänger mit einem HOE 19 etwas geringerer Qualität oder mit geringerer Brennweite a zu arbeiten, weil dort nur die Bedingung besteht, dass ein erheblicher Anteil des Lichtes des Strahls $7_1$ auf den Wandler 21 geworfen werde. Für bestimmte Bemessungen hergestellte HOE können in der Folge durch einfache optische Kopierverfahren, insbesondere als holographische Kontaktkopien, in beliebiger Zahl billig und einfach hergestellt werden. Damit können die Kosten gegenüber herkömmlicher Optik entscheidend gesenkt werden.

Fig. 7 zeigt den Einsatz des gemäss Fig. 6 hergestellten HOE in einer vereinfacht dargestellten Anlage gemäss Fig. 1. Entsprechende Teile und Grössen sind gleich bezeichnet wie in Fig. 1. Im Gegensatz zu Fig. 1 ist hier angenommen, der durch den rotierenden Spiegel 10 abgelenkte Strahl 7 bewege sich in einer Ebene, die schief zur Ebene des HOE 11 steht, während der austretende telezentrische Strahl 1. Ordnung $7_1$ rechtwinklig zur Ebene des HOE 11 austrete. Eine solche Anordnung ist selbstverständlich auch möglich.

Fig. 8 zeigt schematisch einen besonders günstigen Aufbau einer Messvorrichtung unter Ausnützung der Eigenschaften der HOE. Entsprechende Teile sind dabei gleich bezeichnet wie in Figuren 1 und 2. Der Sender 2 und der Empfänger 17 sind in diesem Falle als flache Gehäuse beidseitig des Messbereiches und parallel zur Durchlaufrichtung des zu messenden Objektes 1 angeordnet. Der Strahlengang zwischen dem Laser 3, den nicht dargestellten Elementen 5 und 6, dem rotierenden Spiegel 10 und dem HOE 11 liegt hierbei in einer Ebene, die parallel zur Durchlaufrichtung des Objektes 1 steht. Das HOE 11 ist auf einen durchsichtigen Träger 34 aufgezogen. Der gebeugte Strahl $7_1$ tritt aus dem beispielsweise um 45° geneigten HOE 11 rechtwinklig zur Durchlaufrichtung des Objektes 1 bzw. zur Ebene des Strahlengangs 7 im Sender 2 aus, Das HOE 19 im Empfänger 17 ist entsprechend angeordnet und auf einem Träger 35 angeordnet. Es beugt den Strahl auf den Wandler 21, wobei die Ebene dieses Strahls wieder parallel zur Durchlaufrichtung des Objekts 1 steht. Es ist in dieser Weise eine besonders günstige, platzsparende Anordnung flacher Gehäuseteile beidseitig des Messbereiches möglich. Wie in Fig. 8 ebenfalls angedeutet, sind die Austritts- bzw. Eintrittsöffnungen 15 für den telezentrischen Strahl durch Fenster 36 abgeschlossen.

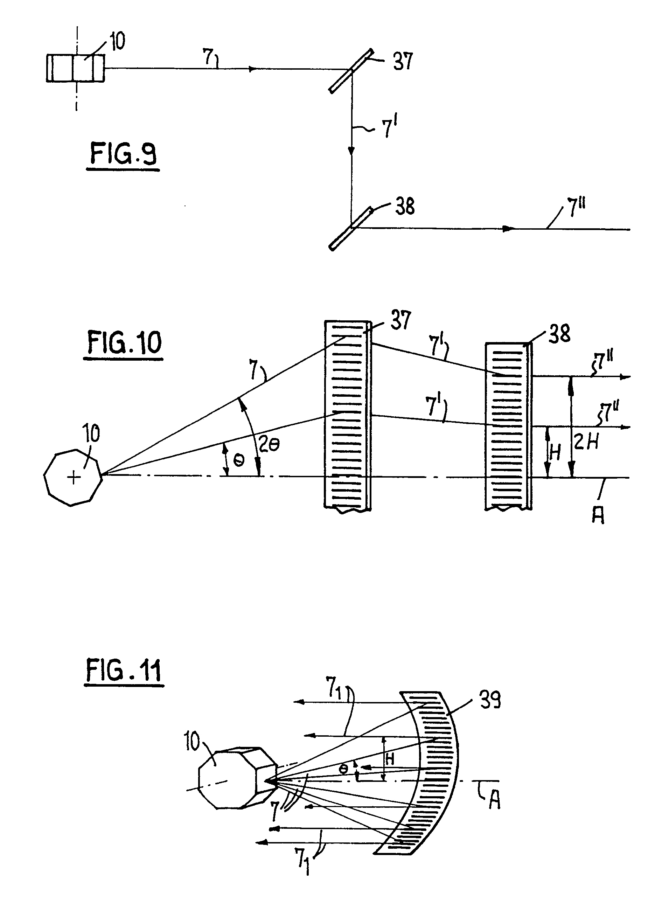

Die Figuren 9 und 10 zeigen schematisch eine Anordnung zur Linearisierung des Zusammenhangs zwischen dem Ablenkungswinkel θ des Lichtstrahls 7 und dem Abstand H des telezentrischen Strahls 7″ von der Längssymmetrieachse A der Vorrichtung. Fig. 10 ist dabei gewissermassen eine Abwicklung der Anordnung nach Fig. 9 und zeigt nur die eine Hälfte des Bereiches. Der durch den rotierenden Spiegel abgelenkte Lichtstrahl 7 trifft auf ein erstes HOE 37, welches so gestaltet ist, dass der gebeugte Strahl 7′ beim Auftreffen auf ein zweites HOE 38 jeweils um eine dem Winkel θ proportionale Strecke H von der Symmetrieachse A entfernt ist. Dieses zweite HOE 38 ist seinerseits so gestaltet, dass der auftreffende Strahl 7′ stets in die telezentrische Richtung parallel zur Symmetrieachse A gebeugt wird und somit als telezentrischer Strahl 7″ austritt. Es besteht damit der Zusammenhang $H = K \cdot \theta$, wobei K eine Konstante ist. In Fig. 10 ist dies dadurch angedeutet, dass der telezentrische Strahl 7″ bei einem Winkel von θ einen Abstand H von der Symmetrieachse A aufweist, während er für einen Winkel 2 θ einen Abstand von 2H aufweist. Diese Lösung ergibt eine weitere Vereinfachung der Auswertung von Messergebnisssen, indem unter der Vorraussetzung einer konstanten Winkelgeschwindigkeit des durch den rotierenden Spiegel 10 abgelenkten Strahles 7, der telezentrische Strahl 7″ sich mit konstanter Geschwindigkeit durch den Messbereich bewegt.

Zur Erstellung der beiden HOE 37 und 38 kann wie folgt vorgegangen werden : das HOE 37 wird anhand einer Computer-Berechnung erstellt. Es handelt sich also um ein sogenanntes computer-generiertes Hologramm oder CGH. Das so erzeugte CGH 37 wird nun in der Position gemäss Fig. 9, bezüglich einer Punktlichtquelle am Ort des Ausgangs der Strahlen 7 angeordnet. Am Ort des HOE 38 in Fig. 9 wird lichtempfindliches Material angebracht, welches nun gemeinsam aus der Punktquelle über das CGH und mittels eines kollimierten Strahls bzw. ebenen Wellenfront in der telezentrischen Richtung belichtet. Es entsteht damit ein HOE, welches die anhand der Fig. 9 und 10 beschriebene Beugung der Strahlen 7′ in die gewünschte Richtung der Strahlen 7″ bewirkt.

Es könnte auch umgekehrt vorgegangen werden, indem vorerst das HOE 38 gestützt auf Computer-Berechnung erstellt wird, worauf über dieses HOE aus der telezentrischen Richtung eine ebene Wellenfront auf lichtempfindliches Material am Ort des HOE 37 geworfen wird, welches lichtempfindliche Material zugleich aus einer konvergierenden Kugelwelle zum Ort der Ausgangstelle der abgelenkten Strahlen 7 belichtet wird. Es wäre dann schliesslich möglich, eines der HOE wiederzuverwenden, um das andere HOE auf holografischem Wege zu erzeugen, wodurch eine Verbesserung solcher HOE möglich wäre. Ein solches Vorgehen könnte vor allem deshalb von Interesse sein, weil es Schwierigkeiten bereiten dürfte, ein CGH grosser Abmessungen in genügender Feinheit bzw. mit genügendem Auflösungsvermögen zu erstellen. Die erwähnte Verbesserung kann erwartet werden, weil im Falle eines CGH beschränkter Auflösung mehrere unerwünschte höhere Ordnungen relativ stark auftreten, die nicht nutzbar sind und auch nicht unterdrückt werden können. Entsprechend fällt der Beugungswirkungsgrad für die 1. Ordnung schlecht aus. Bei der holographischen Reproduktion eines HOE mittels des CGH kann praktisch ausschliesslich die Welle 1, Ordnung zur Wirkung gebracht werden, was zu einem HOE führt, das seinerseits wesentlich verbesserte Eigenschaften für die Beugung 1. Ordnung aufweist.

Fig. 11 zeigt eine weitere Möglichkeit der Linearisierung des telezentrischen Strahls, d.h. der Erzielung eines linearen Zusammenhangs zwischen dem Ablenkungswinkel des Strahls 7 und der Auslenkung H des telezentrischen Strahls $7_1$. Gemäss Fig. 11 ist ein nach einer bestimmten berechneten Kurve gekrümmtes HOE 39 vorgesehen. Die Krümmung ist so gewählt, dass für jeden beliebigen Ablenkungswinkel $\theta$ des am rotierenden Spiegel 10 reflektierten Strahls 7 die Auftreffstelle dieses Strahls auf die optisch wirksame Schicht des HOE 39 in einem Abstand H von der Längssymmetrieachse A liegt, welcher proportional ist dem Winkel. Das HOE ist so beschaffen, dass der gebeugte Strahl $7_1$ stets in paralleler telezentrischer Richtung austritt, wie in Fig. 11 angedeutet.

Zur Erstellung des HOE 39 kann so vorgegangen werden, dass in der berechneten Weise gekrümmtes lichtempfindliches Material am Ort des HOE 39 angebracht und zugleich durch eine Punktlichtquelle am Ort der Reflexion der Strahlen 7 und einer ebenen Wellenfront aus der telezentrischen Richtung belichtet wird. Damit entsteht das gewünschte HOE.

Um optimale Ergebnisse zu erzielen, sind gewisse Bedingungen einzuhalten. Abgesehen davon, dass die Geometrie des Systems sehr genau eingehalten werden muss, ist auch darauf zu achten, dass sich diese Geometrie während des Betriebs nicht ändert, insbesondere dass keine Dimensionsänderung des oder der HOE bzw. CGH eintritt. Letzteres kann erreicht werden durch luftdichte Verkittung zur Verhinderung von Feuchtigkeitsaufnahme durch die Photoschicht. Es kann beispielsweise eine Sandwichbauweise mit Deckglas und Kontaktkleber zur Anpassung des Brechungsindexes zwischen dem Deckglas und dem Photomaterial verwendet werden. Ferner kann Decklack aufgebracht werden, oder es könnte eine direkte Bedampfung mit SiO oder dergleichen erfolgen. Bei den Ausführungen gemäss Fig. 2 und 5 könnte auch ein direktes Aufkleben oder Aufkitten des photografischen Trägers auf das Ablenkprisma mittels optischem Kitt erfolgen. Es muss weiter darauf geachtet werden, dass im ganzen System die Polarisationsbedingungen eingehalten werden. Es könnte auch ein direktes Auftragen der photographischen Schicht auf das Ablenkprisma erfolgen.

Wenn all diese Bedingungen eingehalten sind kann ein hoher Wirkungsgrad, d.h. eine gute Lichtausbeute erzielt werden, und bei optimaler Geometrie sind minimale Linsenfehler zu erwarten. Dabei ist es möglich, relativ grosse Oeffnungen bzw. kurze Brennweiten zu realisieren. In vielen Fällen ist eine ideale Systemintegration beispielsweise in dem Sinne möglich, dass ein HOE mit seinem Träger direkt als Fenster benutzt werden kann. Das wäre beispielsweise bei der Ausführung nach Figuren 1 und 2 möglich, wo die Prismen 12 und 18 direkt als Fenster an den Oeffnungen 15 dienen könnten.

Wie oben bereits erwähnt, ist bei der Herstellung von HOE mit Vorteil Licht derselben Wellenlänge zu verwenden wie bei der späteren Anwendung des erzeugten Gitters zur Erzeugung eines telezentrischen Strahles. Entsprechend kann man natürlich für beide Vorgänge die gleiche Lichtquelle, beispielsweise einen Helium-Neon-Laser, verwenden.

In den Ausführungsbeispielen sind Transmissionshologramme vorhanden mit Ausnahme des Reflexionshologramms nach Fig. 11. Es können jedoch je nach Situation beliebige Hologramme verwendet werden. So könnte das HOE nach Fig. 11 auch als Transmissionshologramm ausgeführt sein. Im Falle der Anordnung nach Fig. 9 und 10 könnten gegebenenfalls die beiden HOE mit Vorteil als Reflexionshologramme ausgeführt sein, damit eine günstige, raumsparende Führung des Strahles möglich ist.

## Ansprüche

1. Verfahren zur Erzeugung eines telezentrischen Lichtstrahls ($7_1$) zur Messung der Dimension und/oder der Lage eines Objektes (1) im Bereich des Ablenkungshubs des telezentrischen Lichtstrahls ($7_1$), wobei ein Lichtstrahl im Brennpunkt einer Optik durch einen Winkelbereich abgelenkt und durch die Optik in die telezentrische Richtung umgelenkt wird und wobei mittels der Optik eine Linearisierung der Auslenkung (H) des telezentrischen Strahls ($7_1$) zum Ablenkwinkel ($\theta$) vorgenommen wird, dadurch **gekennzeichnet**, daß der Lichtstrahl (7) an mindestens einem holographischen optischen Element HOE (11 ; 37, 38 ; 39) der Optik gebeugt wird, das durch Überlagerung einer ebenen, in Richtung des telezentrischen Strahls verlaufenden Wellenfront und einer von einer punktförmigen Lichtquelle im Brennpunkt der Optik ausgehenden Kugelwelle hergestellt ist.

2. Verfahren nach Anspruch 1, dadurch **gekennzeichnet**, daß die Linearisierung der Auslenkung (H) des telezentrischen Strahls ($7_1$) zum Ablenkwinkel ($\theta$) mittels zweier im Abstand voneinander angeordneter Hologramme (37, 38) oder eines gekrümmten Hologramms (39) vorgenommen wird.

3. Verfahren nach Anspruch 1 oder 2, dadurch **gekennzeichnet**, daß neben dem telezentrischen Lichtstrahl ($7_1$) einer bestimmten Ordnung ein Lichtstrahl anderer Ordnung für Hilfsfunktionen herangezogen wird.

4. Verfahren nach Anspruch 3, dadurch **gekennzeichnet**, daß der Lichtstrahl anderer Ordnung auf mindestens einen opto-elektrischen Wandler oder Maßstab (16) geworfen wird, um die Funktion der Strahlbewegung zu erfassen.

5. Vorrichtung zur Erzeugung eines telezentrischen Lichtstrahls ($7_1$) zur Messung der Dimension und/oder der Lage eines Objektes (1) im Bereich des Ablenkungshubs des telezentrischen Lichtstrahls ($7_1$), mit Mitteln (10) zur Strahlablenkung im Brennpunkt einer Optik, die einen Lichstrahl (7) in die telezentrische Richtung umlenkt und die eine Linearisierung der Auslenkung (H) des telezentrischen Strahls ($7_1$) zum Ablenkwinkel ($\theta$) vornimmt, dadurch **gekennzeichnet**, daß die Optik mindestens ein holographisches optisches Element HOE (11 ; 37, 38 ; 39) aufweist, das durch Überlagerung einer ebenen, in Richtung des telezentrischen Strahls (7) verlaufenden Wellenfront und einer von einer punktförmigen Lichtquelle im Brennpunkt der Optik ausgehenden Kugelwelle hergestellt ist.

6. Vorrichtung nach Anspruch 5, dadurch **gekennzeichnet**, daß das HOE (11) eben und auf einem prisma (12, 28) als Träger angebracht ist, das zur Änderung der Strahlgeometrie und zur Umlenkung des gebeugten Lichtstrahls ($7_1$) in die telezentrische Richtung ausgelegt ist.

7. Vorrichtung nach einem der Ansprüche 5 oder 6, mit einer den telezentrischen Strahl ($7_1$) auf einen photoelektrischen Wandler (21) werfenden Sammeloptik, dadurch **gekennzeichnet**, daß die Sammeloptik mindestens ein HOE (19) aufweist.

8. Vorrichtung nach Anspruch 7, dadurch **gekennzeichnet**, daß der telezentrische Strahl ($7_1$) in einer Ebene abgelenkt wird, die rechtwinklig zu der Ebene steht, in welcher der Lichtstrahl (7) durch die genannten Mittel (10) abgelenkt wird und auch senkrecht zu der Ebene steht, in welcher der Lichtstrahl ($7_1$) nach Austritt aus der Sammeloptik (19) liegt, wobei die HOE (11, 19) zu diesen genannten Ebenen geneigt angeordnet sind.

9. Verfahren zur Herstellung eines HOE mittels einer Vorrichtung zur Erzeugung eines telezentrischen Lichtstrahls zur Messung der Dimension und-/oder der Lage eines Objektes (1) im Bereich des Ablenkungshubs des telezentrischen Lichtstrahls ($7_1$) mit Mitteln (10) zur Strahlablenkung im Brennpunkt einer Optik, die einen Lichtstrahl (7) in die telezentrische Richtung umlenkt, bei dem lichtempfindliches Material am Ort der Optik mit kohärentem Licht aus einer punktlichtquelle (32) am Ort der Strahlablenkung und einer in Richtung des telezentrischen Strahles laufenden ebenen Wellenfront (33) belichtet wird.

10. Verfahren nach Anspruch 9, dadurch **gekennzeichnet**, daß zwischen die punktlichtquelle (32) und das lichtempfindliche Material ein geeignetes HOE oder ein computer-generiertes Hologramm (CGH, 37) eingesetzt wird, welches einen in der punktlichtquelle (32) abgelenkten Strahl derart auf das lichtempfindliche Material beugt, daß sich der Auftreffpunkt des Strahls darauf linear zum Auslenkwinkel ($\theta$) verschiebt.

11. Verfahren nach Anspruch 10, dadurch **gekennzeichnet**, daß mittels einer ebenen Wellenfront durch das auf dem lichtempfindlichen Material entstandene HOE und einer konvergenten Kugelwellenfront am Ort des CGH eine Nachbildung dieses CGH erzeugt wird.

## Claims

1. A method for generating a telecentric light beam ($7_1$) for measuring the dimensions and/or the position of an object (1) within the range of deflection of the telecentric light beam ($7_1$), wherein a light beam in the focus of an optical system is deflected within an angular range and diffracted by means of the optical system into the telecentric direction and wherein the deflection (H) of the telecentric beam ($7_1$) is linearized with respect to the angle ($\theta$) of deflection, **characterized** in that the light beam (7) is diffracted at at least one holographic optical element HOE (11 ; 37, 38 ; 39) being part of the optical system, which HOE is generated by interfering a plane wave front extending in the direction of the telecentric beam and a spherical wave generated by a point source of light in the focus of the optical system.

2. A method according to claim 1, **characterized** in that the deflection (H) of the telecentric beam ($7_1$) with respect to the angle ($\theta$) of deflection is linearized by means of two distantly arranged holograms (37, 38) or, respectively, one curved hologram (39).

3. A method according to claim 1 or 2, **characterized** in that besides the telecentric light beam ($7_1$) of a definite order, a light beam of a different order is used for additional functions.

4. A method according to claim 3, **characterized** in that the light beam of a different order is projected on at least one opto-electric converter or measuring device (16) to detect the function of the movement of the beam.

5. A device for generating a telecentric light beam ($7_1$) for measuring the dimensions and/or the position of an object (1) within the range of deflection of the telecentric light beam ($7_1$) comprising means (10) for deflecting the beam in the focus of an optical system, which optical system deflects a light beam (7) to the telecentric direction and linearizes the deflection (H) of the telecentric beam ($7_1$) with respect to the angle ($\theta$) of deflection, **characterized** in that the optical system comprises at least one holographic optical element HOE (11 ; 37, 38 ; 39) which is generated by interfering a plane wave front extending in the direction of the telecentric beam (7) and a spherical wave generated by a point source of light in the focus of the optical system.

6. A device according to claim 5, **characterized** in that the HOE (11) is two-dimensionally shaped and fixed to a supporting prism (12, 28) which is designed for changing the geometrical conditions of the beam and for deflecting the diffracted light beam ($7_1$) into the telecentric direction.

7. A device according to one of the claims 5 or 6, further comprising a collecting optical system projecting the telecentric beam ($7_1$) to a photoelectric converter (21), **characterized** in that the collecting optical system comprises at least one HOE (19).

8. A device according to claim 7, **characterized** by that the telecentric beam ($7_1$) is deflected within a plane which is rectangular to the plane, in which the light beam (7) is deflected by said means (10), and which is also rectangular to the plane, in which the light beam ($7_1$) is located when having left the collecting optical system (19), wherein the HOE (11, 19) are inclined with respect to said planes.

9. A method for generating a HOE by means of a device for generating a telecentric light beam for measuring the dimensions and/or the position of an object (1) in the range of deflection of the telecentric light beam ($7_1$) by means (10) for deflecting the beam in the focus of an optical system, which optical system deflects a light beam (7) into the telecentric direction, wherein a light-sensitive material, which is arranged at the location of the optical system, is exposed to a coherent light from a point source of light (32) arranged at the location of the deflection of the beam and to a plane wave front (33) extending in the direction of the telecentric beam.

10. A method according to claim 9, **characterized** in that an appropriate HOE or, respectively, a computer generated hologram (CGH, 37) is positioned between the point source of light (32) and the light-sensitive material, which HOE or CGH, respectively, defracts a beam deflected in the point source of light (32) to the light-sensitive material such that the point of projection of the beam is shifted linearly with respect to the angle (θ) of deflection.

11. A method according to claim 10, **characterized** in that a copy of said CGH is generated by means of a plane wave front through the HOE generated on the light-sensitive material and a convergent spherical wave front at the location of the CGH.


## Revendications

1. Procédé pour produire un rayon lumineux télécentrique ($7_1$) destiné à mesurer les dimensions et/ou la position d'un objet (1) dans la plage de l'amplitude de déviation dudit rayon lumineux télécentrique ($7_1$), un rayon lumineux étant dévié au foyer d'un objectif par une zone angulaire et renvoyé en direction télécentrique par cet objectif et une linéarisation de l'excursion (H) du rayon télécentrique ($7_1$) vers l'angle de déviation (θ) étant effectuée au moyen de l'objectif, caractérisé en ce que le rayon lumineux (7) diffracté par au moins un élément optique holographique HOE (11 ; 37, 38 ; 39) est réalisé par superposition d'un front d'ondes plan s'étendant en direction du rayon télécentrique et d'une onde sphérique émanant d'une source lumineuse punctuelle foyer de l'objectif.

2. Procédé selon la revendication 1, caractérisé en ce que la linéarisation d' l'excursion (H) du rayon télécentrique ($7_1$) en direction de l'angle de déviation (θ) s'effectue au moyen de deux hologrammes (37, 38) disposés à une certaine distance l'un de l'autre ou au moyen d'un seul hologramme courbe (39).

3. Procédé selon l'une quelconque des revendications 1 ou 2, caractérisé en ce que, outre le rayon télécentrique ($7_1$) d'un certain ordre, l'on utilise un rayon lumineux d'un autre ordre pour exercer les fonctions auxiliaires.

4. Dispositif selon la revendication 3, caractérisé en ce que le rayon lumineux d'un autre ordre est projeté sur au moins un convertisseur ou un échelle de mesure optoélectrique (16), afin de saisir la fonctin exercée par le mouvement du rayon.

5. Dispositif pour produire un rayon lumineux télécentrique ($7_1$) destiné à mesurer la dimension et/ou la position d'un objet (1) dans la plage de l'amplitude de la déviation du rayon lumineux télécentrique ($7_1$), comportant des moyens (10) pour la déviation du rayon au foyer d'un objectif qui renvoie un rayon lumineux (7) dans la direction télécentrique et qui procède à un linéarisation de l'excursion (H) du rayon télécentrique ($7_1$) en direction de l'angle de déviation (θ), caractérisé en ce que l'objectif présente au moins un élément optique holographique HOE (11 ; 37, 38 ; 39) qui est réalisé par superposition d'un front d'ondes plan s'étendant en direction du rayon télécentrique (7) et d'une onde sphérique émanant d'une source lumineuse punctuelle au foyer de l'objectif.

6. Dispositif selon la revendication 5, caractérisé en ce que le HOE (11) servant de support est plan et fixé sur un prisme (12, 28) qui est étudié pour modifier la géométrie du rayon et pour renvoyer le rayon lumineux diffracté ($7_1$) dans la direction télécentrique.

7. Dispositif selon l'une quelconque des revendications 5 ou 6, comportant un objectif global projetant le rayon télécentrique ($7_1$) sur un convertisseur photoélectrique (21), caractérisé en ce que l'objectif global présente au moins un HOE (19).

8. Dispositif selon la revendication 7, caractérisé en ce que le rayon télécentrique ($7_1$) est dévié dans un plan qui perpendiculaire au plan dans lequel le rayon lumineux (7) est dévié par les moyens connus (10) et également perpendiculaire au plan dans lequel le rayon lumineux ($7_1$) se situe après sa sortie de l'objectif (19), les HOE (11, 19) étant inclinés en direction de ces plans.

9. Dispositif pour la réalisation d'un HOE au moyen d'un dispositif pour réaliser un rayon lumineux télécentrique destiné à mesurer les dimensions et/ou la position d'un objet (1) dans la plage de l'amplitude de déviation du rayon lumineux télécentrique ($7_1$) comportant des moyens (10) pour la déviation du rayon au foyer d'un objectif qui renvoie un rayon lumineux (7) dans la direction télécentrique, par lequel une matière photosensible est éclairée à l'endroit de l'objectif par de la lumière cohérente provenant d'une source lumineuse punctuelle (32) en forme point placée à l'endroit de la déviation du rayon et d'un front d'ondes plan (33) s'étendant en direction du rayon télécentrique.

10. Procédé selon la revendication 9, caractérisé en ce que, entre la source lumineuse punctuelle (32) et la matière photosensible est placé un HOE approprié ou un hologramme (CGH, 37) généré par ordinateur, lequel diffracte un rayon dévié sur la matière photosensible de telle sorte que le point d'incidence du rayon sur ce matériau se déplace linéairement par rapport à l'angle de déviation ($\theta$).

11. Procédé selon la revendication 10, caractérisé en ce qu'au moyen d'un front d'ondes plan passant à travers le HOE et sur la matière photosensible et d'un front d'ondes sphériques convergent sur le lieu du CGH est générée une reproduction de ce CGH.

FIG.1

FIG.2

FIG.3

FIG.4

FIG.5

FIG.6

FIG.7

FIG.8

FIG.9

FIG.10

FIG.11